(19) Europäisches Patentamt

European Patent Office

Office européen des brevets

(11) **EP 0 662 604 B1**

## (12) EUROPEAN PATENT SPECIFICATION

(45) Date of publication and mention
of the grant of the patent:
**02.11.2000 Bulletin 2000/44**

(21) Application number: **94914625.2**

(22) Date of filing: **16.05.1994**

(51) Int. Cl.7: **G01G 9/00**, G01G 23/01,
G01G 23/37, G01G 23/10

(86) International application number:
**PCT/JP94/00790**

(87) International publication number:
**WO 94/27122 (24.11.1994 Gazette 1994/26)**

(54) **Measuring dynamic load with a forced moved base**

Messung eines dynamischen Gewichts mit einer zwangsbewegten Grundplatte

Mesurage d'une charge dynamique avec un mouvement forcé de la base

(84) Designated Contracting States:
**DE FR GB SE**

(30) Priority: **17.05.1993 JP 13953193**

(43) Date of publication of application:
**12.07.1995 Bulletin 1995/28**

(73) Proprietors:
- **KYOEI AUTOMATIC CONTROL TECHNOLOGY CO., LTD.**
  **Amagasaki-shi, Hyogo 661 (JP)**
- **TADA, Eiichi**
  **Izumi-shi, Ohsaka 599-02 (JP)**

(72) Inventors:
- **TADA, Eiichi**
  **Izumi-shi, Osaka 590-02 (JP)**
- **WATANABE, Kazuo**
  **Amagasaki-shi, Hyogo 660 (JP)**

(74) Representative:
**Zinnecker, Armin, Dipl.-Ing. et al
Lorenz-Seidler-Gossel,
Widenmayerstrasse 23
80538 München (DE)**

(56) References cited:
WO-A-93/05371           JP-A- 1 299 420
JP-A- 59 054 932        JP-A- 61 083 918
US-A- 5 178 228

- **TECHNISCHES MESSEN ATM, vol. 59, no. 6, June 1992 MUNCHEN DE, pages 245-251, XP 000305942 W.RIEHEMANN ET AL. 'Hochauflösende Messung der Spannungrelaxation in Werkstoffen mit elektrodynamischen Waagen'**
- **U.MILZ: "Messung von Kraft und Masse unter Einfluss von Störbeschleunigungen", VDI-BERICHTE , , -1978, vol. , no. 312, pages 134 to 141**

## Description

FIELD OF THE INVENTION

The present invention relates to a method and an apparatus for a dynamic load measurement suitable for time-varying forces under dynamic states excited by shaking, oscillating and/or vibrating conditions, such that measuring an instant load in case that a load is varying during measuring by fluid flowing, and measuring a load for moving objects such as living fishes, and for a time-varying place or base such as sailing vessels, flying airplanes, conveyers and so on, and for running vehicles and so on.

BACKGROUND OF THE INVENTION

Up to now, many ideas are proposed about a load measurement of a time-varying force under dynamic states excited by shaking, oscillating and/or vibrating conditions. However conventional load measurement methods and equipment are to measure a static force or a quasi-dynamic force at measuring state conditions, with a long range period on 1 second period, with a small acceleration depending on less than one G. Such conventional dynamic load measurements are not beyond a range of a static load measurement.

The present inventors have already proposed the dynamic load sensing method, the dynamic load analyzing sensor and the dynamic load measurement equipment beyond a range of a static load and/or a quasi-dynamic load measurement in PCT/JP91/01168 (WO93/05374) and PCT/JP92/01094 (WO93/05371).

The present invention is to make an offer to a method and an apparatus for measuring a dynamic load without being affected by shaking, oscillating and/or vibrating conditions excited by the apparatus itself and the external environment, using by much more improved on the above dynamic load sensing method, the above dynamic load analyzing sensor, and the above dynamic load measurement equipment.

DISCLOSURE OF INVENTION

The present invention is given with claims 1, 3 and will be explained in detail as follows. The method for measuring a dynamic load concerned in the present invention comprises that one end part of a component structure composed by a spring mass system being fixed to the base composed by a non-spring mass system, the other end part being free, working a load at the free end part of said component structure composed by the spring mass system, making said base periodically and continuously move, vibrate and/or do resultant motion together with said component structure composed by the spring mass system (as follows; the meaning of 'moving' or 'vibrating' is here defined as the meaning of a time-varying motion including moving and vibrating motions and their resultant motions), measuring continuously a displacement $y_1$ of said base and a displacement $y_2$ of said free end part of said component structure, getting the first-order derivatives $\dot{y}_1$ and $\dot{y}_2$ and the second-order derivatives $\ddot{y}_1$ and $\ddot{y}_2$ with respect to time from said displacements $y_1$ and $y_2$, a mass m of said load is calculated from the following equation:

$$m[\ddot{y}]=mg-[(mg+kf_2(y-y_1+y_2))-f_3(\dot{y}-\dot{y}_1+\dot{y}_2)+f_1(m\ddot{y}_1,m\ddot{y}_2)]$$

(where the symbol [ ] represents a (degree of freedom x number of data) measurement matrix, g being the gravitational acceleration, $kf_2(y-y_1+y_2)$ being the material term of the component structure of the spring mass system, k being a spring constant, $f_3(\dot{y}-\dot{y}_1+\dot{y}_2)$ being the damping term such as viscous friction, coulomb, hysteresis, fluid drag and fluid virtual mass drag damping, and $f_1(m\ddot{y}_1, m\ddot{y}_2)$ being the resultant time-varying forces term acting on the object of the mass m).

The apparatus for measuring a dynamic load concerned in the present invention comprises a base composed by a non-spring mass system, a frame body which is composed by a spring mass system and whose one end part is fixed to said base and whose other end part is free, a first displacement sensor measuring a displacement $y_1$ of said base excited by vibrations and oscillations at a fixed end part of said frame body, a second displacement sensor measuring a displacement $y_2$ of said free end part of said frame body at a free end part of said frame body, an analyzing unit by which a mass of a load acting on said free end part is calculated from the displacements $y_1$ and $y_2$, and a vibrating means which makes said base periodically and continuously vibrate together with said frame body and the first and the second displacement sensors. Said analyzing unit is that getting the first-order derivatives $\dot{y}_1$ and $\dot{y}_2$ and the second-order derivatives $\ddot{y}_1$ and $\ddot{y}_2$ with respect to time from said displacements $y_1$ and $y_2$, a mass m of said load is calculated from the following equation:

$$m[\ddot{y}]=mg-[(mg+kf_2(y-y_1+y_2))-f_3(\dot{y}-\dot{y}_1+\dot{y}_2)+f_1(m\ddot{y}_1,m\ddot{y}_2)]$$

(where the symbol [ ] represents a (degree of freedom x number of data) measurement matrix, g being the gravitational acceleration, $kf_2(y-y_1+y_2)$ being the material term of the component structure of the spring mass system, k being a spring constant, $f_3(y-y_1+y_2)$ being the damping term such as viscous friction, coulomb, hysteresis, fluid drag and fluid virtual mass drag damping, and $f_1(m\ddot{y}_1, m\ddot{y}_2)$ being the resultant time-varying forces term acting on the object of the mass m).

The first and the second displacement sensors comprise a light-emitting element, a one dimensional position detection element which provides a pair of semiconductor pin-photo diode elements (in short, PPD) arranged with a thin gap, and a spring-bar element inserted into a portion between a light-emitting element and a one dimensional position detection element. One of two pairs of said light-emitting elements and said one dimensional position detection elements is set up a free end part of said frame body, the other being set up a fixed end part of said frame body. Fixing the one edge of said spring-bar elements to a free end part or fixed end part of said frame body, masking a portion of said one dimensional position detection element by said spring-bar, said one dimensional position detection element generates the intensity of the light lay from said light-emitting element in proportion with the vibration of said spring-bar. Said vibrating means is to vibrate said base in the direction of working a load to the free end part of said component structure composed by a spring mass system.

The principle of the method for measuring dynamic loads of the present invention will be explained hereinafter.

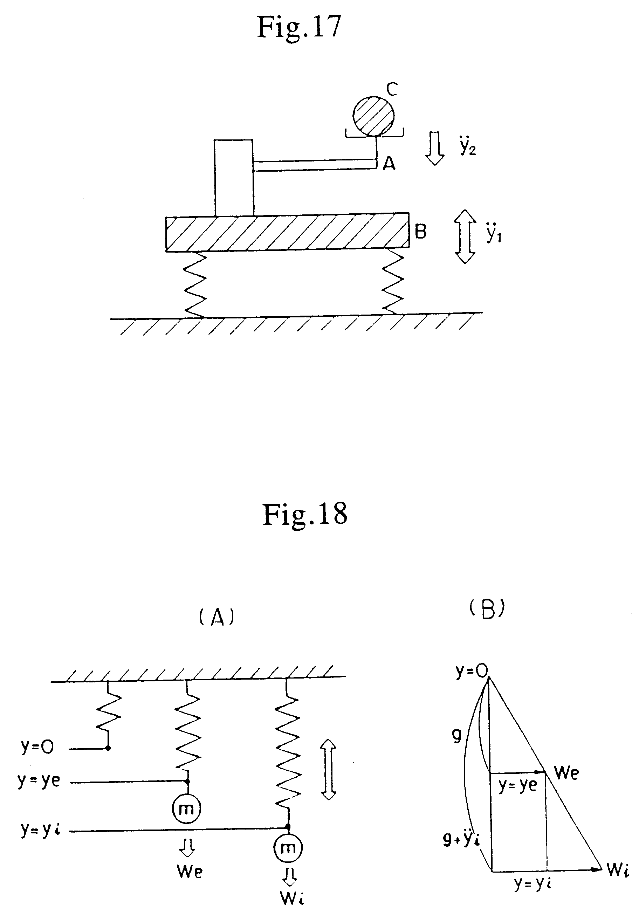

In an apparatus as shown in Figure 17(A), the base composed by a non-spring mass system and the sensor assembly (A) of a beam shape composed by a spring mass system on the base are varying, vibrating and oscillating (for instance; in Figure 17(B)). The base B is vibrating with the acceleration $\ddot{y}_1$ and the free end part of the sensor assembly A is vibrating against the base B with the acceleration $\ddot{y}_2$. Here assuming that the base B is fixed, the instant measuring load $W_i$ at the same time is calculated from the law of motion, that is,

$$W_i = m\left(g + \ddot{y}_2\right) = W_e\left(1 + \ddot{y}_2\big/g\right)$$

where $W_e$ (= mg) is the rest load (N) of a measuring object C, m being the mass (Kg) of the object.

Using by the above relation, the rest load $W_e$ (N) is calculated from the following equation,

$$We = \frac{W_i}{\left(1 + \ddot{y}_2\big/g\right)} = \frac{W_i g}{g + \ddot{y}_2}$$

The equation of the instant measuring load $W_i$ as shown in above equation is derived by what is known as D'Alambert's dynamic equilibrium. This dynamic equilibrium is completely idealized equation. The actual equation should take the component materials and structural configurations of the element into consideration. In general, the undamped one-degree spring mass system is subjected to an general type forcing function F(t). The differential equation of motion is derived by the law of motion as follows,

$$m\ddot{y} + ky = F(t)$$

In the spring mass system as shown in Figure 18(A), the initial condition is at time when the system is in its equilibrium position $y_e$, that is the displacement derived by the rest load. The equation of motion is as follows,

$$F(t) = m\ddot{y} - m\ddot{y}_e + k(y - y_e)$$

Here $y_i$ is an instant displacement against an instant load $W_i$ exited by time varying forces. Thus the expression for F(t) can be written as,

$$F(t) = W_i - W_e$$

Thus the two above equations yield,

$$m\ddot{y}_i - m\ddot{y}_e + k(y_i - y_e) = W_i - W_e$$

In this equation, the displacement $y_e$ is constant, the acceleration is,

$$\ddot{y}_e = 0$$

The above equation is,

$$m\ddot{y}_i + k(y_i - y_e) = W_i - W_e$$

This equation can be deformed as,

$$We\frac{\ddot{y}_i}{g} + k(y_i - y_e) = W_i - W_e$$

According to Figure 18(B),

$$W_e\frac{\ddot{y}_i}{g} + k(y_i - y_e) = W_i - W_e$$

Thus,

$$y_i - y_e = y_i - y_e\frac{g}{(g + \ddot{y}_i)} = y_i\left(\frac{\ddot{y}_i}{g + \ddot{y}_i}\right)$$

Therefore, by substituting this relation into the equation of $W_e$,

$$We\frac{\ddot{y}_i}{g} + k(y_i - y_e) = W_i - W_e$$

By simplifying,

$$We = \frac{W_i g}{g + \ddot{y}_i} - \frac{k \cdot y_i \cdot g \cdot \ddot{y}_i}{(g + \ddot{y}_i)^2}.$$

However in case of Figure 17, the free end part of the sensor assembly A is vibrating with the acceleration $\ddot{y}_{2i}$ against the base B. In this case, by substituting $(\ddot{y}_{2i} - \ddot{y}_{1i})$ into $y_i$ of the equation of the case of the base B being still, the above equation,

$$m\ddot{y}_i - m\ddot{y}_e + k(y_i - y_e) = W_i - W_e$$

can be expressed as

$$m(\ddot{y}_{2i} - \ddot{y}_{1i}) + k(y_{2i} - y_{1i}) = m(g + \ddot{y}_{2i} - \ddot{y}_{1i})$$

By simplifying,

$$We = \frac{W_i g}{g + \ddot{y}_{2i} - \ddot{y}_{1i}} - \frac{k \cdot y_{2i} \cdot g \cdot (\ddot{y}_{2i} - \ddot{y}_{1i})}{(g + \ddot{y}_i - \ddot{y}_{1i})^2}$$

As the results, the rest load $W_e$ is calculated by computing the acceleration $\ddot{y}_{1i}$ from the displacement $y_{1i}$ of the base B and by computing the instant load $W_i$ and the acceleration $\ddot{y}_{2i}$ from the displacement $y_{2i}$ of the sensor assembly A. Getting tables of the relation between rest loads $W_e$ and displacements $y_1$ and $y_2$, respectively, it is easy to transform displacements $y_1$ and $y_2$ of measuring to instant loads $W_i$. And also an instant load $W_i$ is calculated from the law of Hook using by the spring constant k. The spring constant k is determined by a shape, a configuration and material of the component structure composed the sensor assembly A.

The above principle explanation doesn't take a treatment of a vibration and a disturbance excited by the apparatus itself and external environments into consideration. The actual time series data equation should take a time relation into consideration , a time relation is called by the inertia term, the motion being continuous.

In this present invention, making continuously the base B move and vibrate together with the sensor assembly A, measuring the time series data, analyzing continuously the time series data, it is possible to exclude the influence of the disturbance for a displacement measurement of the sensor assembly A and the base B.

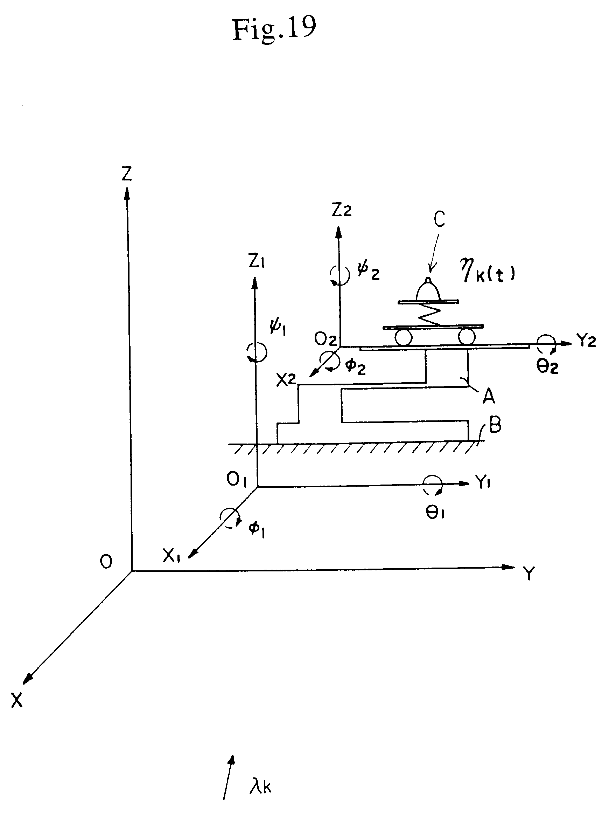

In Figure 19, the sensor assembly A of the base environment and the measuring object C doing the three-dimensional motion, there is an external vibration source point k (k=1, ,N) outside the sensor assembly A, where a vibration wave is $\xi_k(t)$, a velocity wave being $\dot{\xi}_k(t)$, a acceleration wave being $\ddot{\xi}_k(t)$.

The vibration wave $\dot{\xi}_k(t)$ acting on the sensor assembly A from the external vibration source point k is given by the expressions,

$$\xi'_k(t) = \lambda_k \xi_k(t)$$

$$\dot{\xi}'_k(t) = \lambda_k \dot{\xi}_k(t)$$

$$\ddot{\xi}'_k(t) = \lambda_k \ddot{\xi}_k(t)$$

where $\lambda_k$ is a damping function and is depend on a distance between the vibration source point k and the sensor assembly A, a propagation path, a propagation medium and a vibration frequency, and $\lambda_k$ is given by the expression,

$$\lambda_k \propto f$$

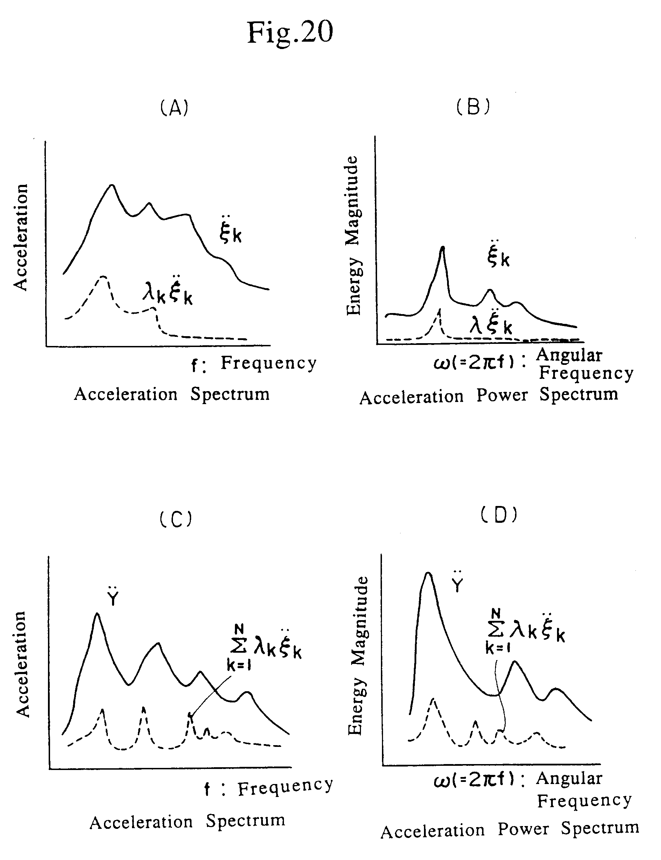

In the case of the sensor assembly A itself being vibrating, a vibration wave is y(t), a velocity wave being $\dot{y}(t)$, an acceleration wave being $\ddot{y}(t)$. Figure 20 shows the acceleration spectrum and the acceleration power spectrum of them.

The vibration wave acting on the sensor assembly A is,

$$y_1(t) = Y(t) + \sum_{k=1}^{N} \lambda_k \xi_k(t)$$

The velocity wave is,

$$\dot{y}_1(t) = \dot{Y}(t) + \sum_{k=1}^{N} l_k \dot{x}_k(t)$$

The external force acting $my_1$ on the measuring object C (mass is m) is given as follows,

$$m\ddot{y}_1(t) = m\ddot{Y}(t) + m\sum_{k=1}^{N} l_k \ddot{x}_k(t)$$

The spectrum of the vibration wave, that is, the energy spectrum versus the vibration frequency (t;time, $0 \le t \le T$) is as follows respectively,

$$S_\xi(\omega) = \lim_{T \to \infty} \frac{1}{T} \left| \int_{-\infty}^{\infty} \left( \sum_{k=1}^{N} \lambda_k \ddot{\xi}_k(t) \right) e^{-jwt} dt \right|^2$$

$$S_y(\omega) = \lim_{T \to \infty} \frac{1}{T} \left| \int_{-\infty}^{\infty} \ddot{Y}(t) e^{-jwt} dt \right|^2$$

Then,

$$\alpha = \frac{m\sum_{k=1}^{N}\lambda_k \ddot{\xi}_k(t)}{m\ddot{y}(t)} = \frac{\sum_{k=1}^{N}\lambda_k \ddot{\xi}_k(t)}{\ddot{y}(t)}$$

($S_\xi(\omega)$ and $S_y(\omega)$ are finite.)

Here the ratio of the force excited by the motion of the sensor assembly A to the force of vibration disturbances is defined by the following equation,

$$\alpha = \frac{m\sum_{k=1}^{N}\lambda_k \ddot{\xi}_k(t)}{m\ddot{y}(t)} = \frac{\sum_{k=1}^{N}\lambda_k \ddot{\xi}_k(t)}{\ddot{y}(t)}$$

From the above equation, it is satisfied with the following relation in order to exclude the external vibration terms,the force condition, $\alpha \ll 1$, and the energy condition, $\alpha^2 \ll 1$. As the results, making that the motion of the sensor assembly A is larger than the external vibration terms, it is possible to measure stably a dynamic load.

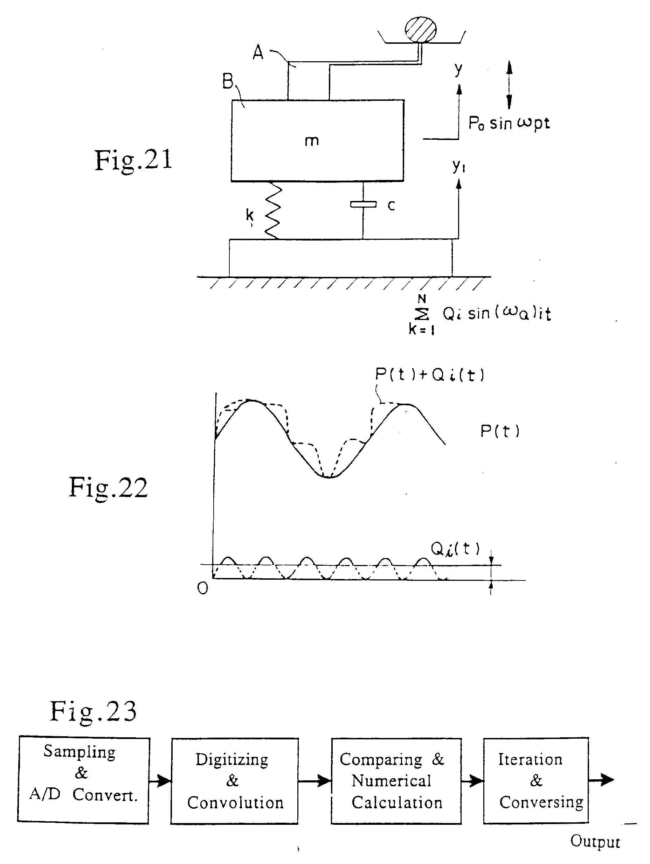

Consider for example the the spring mass system of one degree of freedom shown in Figure 21, whose mass m is restricted to act on the sensor assembly A by the vibration with the base B.(Here it doesn't take the resultant mass spring system vibration between the sensor assembly A and the base B.) The time varying force acting on the base B having the object mass m supported by the damper C and the spring constant k is $P_0 sin\omega_p t$.

$$y = y_p \cos(\omega_p t - \delta)$$

At the same time, the external time varying forces acting on the object from the spring k and the damper C is as follows,

$$\sum_{i=1}^{N} Q_i \sin \omega_{Qi} t$$

The differential equation of motion for this system derived by the next relation,

$$m\ddot{y} + k(\dot{y} - \dot{y}_1) + C(y - y_1) = P_0 \sin\omega_p t$$

by simplifying,

$$m\ddot{y} + k\dot{y} + Cy = C\dot{y}_1 + ky_1 + P_0 \sin\omega_p t$$

where,

$$C\dot{y}_1 + ky_1 = \sum_{i=1}^{N} Q_i \sin \omega_{Qi} t$$

The amplitude by the impressed forces is,

$$y_0 = \frac{P_0/k}{\sqrt{\left(1-\dfrac{\omega_p}{\omega_n^2}\right)^2 + \left(2\dfrac{C}{C_c}\cdot\dfrac{\omega_p}{\omega_n}\right)^2}} + \sum_{i=1}^{N} \frac{Q_i/k}{\sqrt{\left(1-\dfrac{\omega_p}{\omega_n^2}\right)^2 + \left(2\dfrac{C}{C_c}\cdot\dfrac{\omega_p}{\omega_n}\right)^2}}$$

$$= P_0/k \left\{ \frac{1}{\sqrt{\left(1-\dfrac{\omega_p}{\omega_n^2}\right)^2 + \left(2\dfrac{C}{C_c}\cdot\dfrac{\omega_p}{\omega_n}\right)^2}} + \sum_{i=1}^{N} \frac{Q_i/P_0}{\sqrt{\left(1-\dfrac{\omega_p}{\omega_n^2}\right)^2 + \left(2\dfrac{C}{C_c}\cdot\dfrac{\omega_p}{\omega_n}\right)^2}} \right\}$$

For example, Figure 22 shows the concept drawing of the spring mass system exited by the force P(t) by the motion of the base B and the external forces Qi(t). In this case, the influence effect of the external disturbance for the impressed force term Po is calculated from the following relation,

$$\frac{\lambda_i Q_i}{P_0} = \frac{Q_i}{P_0}\cdot\lambda_i = \frac{Q_i}{P_0}\sqrt{\frac{1+\left(2\dfrac{C}{C_c}\cdot\dfrac{\omega_p}{\omega_n}\right)^2}{\left(1-\dfrac{\omega_p}{\omega_n^2}\right)^2 + \left(2\dfrac{C}{C_c}\cdot\dfrac{\omega_p}{\omega_n}\right)^2}}$$

where Cc is the critical damping constant, $\omega_n^2$ being the natural frequency.

$$C_c = 2m\omega_n = 2\sqrt{mk}$$

$$\omega_n^2 = \frac{k}{m} = \left(\frac{C}{2m}\right)^2$$

Assuming that the dynamic condition of the base B is satisfied with the following relation, it is possible to exclude the external disturbance and to measuring only the motion of the base B by the sensor assembly A. The assumption condition is

$$Q_1/P_0 \ll 1,$$

excluding the amplitude by said impressed force, the above equation is,

$$y_0 = \frac{P_0/k}{\sqrt{\left(1-\dfrac{\omega_p}{\omega_n^2}\right)^2 + \left(2\dfrac{C}{C_c}\cdot\dfrac{\omega_p}{\omega_n}\right)^2}}$$

This relation means that the force of the base B is larger than the forces of the disturbances.

The internal vibration force $my_2$ excited by the vibration of the motion of the measuring object C itself is given as follows,

$$m\ddot{y}_2(t) = m\sum_{k=1}^{M}\ddot{\eta}_k(t)$$

By the same analysis, the ratio of the force excited by the motion of the sensor assembly A to the force of vibration of the measuring object itself is defined by the following equation,

$$\beta = \frac{m\sum_{k=1}^{M}\ddot{\eta}_k(t)}{m\ddot{Y}(t)} = \frac{\sum_{k=1}^{M}\ddot{\eta}_k(t)}{\ddot{Y}(t)}$$

By the same analysis, it is possible to exclude the influence of the motion of the measuring object itself. It is also possible to exclude the influence of the motion of the measuring object itself in the case of the object C making the base B vibrate.

In the present invention, satisfying with the above condition, the time series data measuring by the sensor assembly A is calculated from the following equation,

$$m\ddot{y} = mg - (mg + kf_2(y - y_1 + y_2)) - f_3(\dot{y} - \dot{y}_1 + \dot{y}_2) + f_1(m\ddot{y}_1, m\ddot{y}_2)$$

where $y_1$ is a measuring displacement of the base B, $y_2$ being a measuring displacement of the free end part of the sensor assembly A against the base B as above mentioned. Measuring $y_1$ and $y_2$, a material term $kf_2(y - y_1 + y_2)$, a damping term $f_3(\dot{y} - \dot{y}_1 + \dot{y}_2)$ and a force term $f_1(m\ddot{y}_1, m\ddot{y}_2)$ are calculated from the above measuring data, where $kf_2(y - y_1 + y_2)$ being the material term of the component structure of the spring mass system, k being a spring constant, $f_3(\dot{y} - \dot{y}_1 + \dot{y}_2)$ being the damping term such as viscous friction, coulomb, hysteresis, fluid drag and fluid virtual mass drag damping, and $f_1(m\ddot{y}_1, m\ddot{y}_2)$ being the resultant time-varying forces term acting on the object of the mass m.

A solution of the differential equation by said time series data is gained by a conventional numerical calculation method. For instance, as shown in Figure 23, sampling the time series data of displacements, converting analog data to digital data, dizitising and convoluting wave data, analyzing a motion an a vibrating condition, determining functions of $f_1$, $f_2$ and $f_3$, a mass m is calculated from measuring time series data of number N as following equation,

$$m[\ddot{y}] = mg - [(mg + kf_2(y - y_1 + y_2)) - f_3(\dot{y} - \dot{y}_1 + \dot{y}_2) + f_1(m\ddot{y}_1, m\ddot{y}_2)]$$

where the symbol [] represents a (degree of freedom x number of data) measurement matrix. The degree of freedom being n and data number being N , a measuring matrix is a (n x N) determinant. In general, the degree of freedom is one and the matrix is a (1 x N) matrix.

For example, assuming that the function $f_3$ is Taylor's expansion, the following relation is gained,

$$f_1(m\ddot{y}_1, m\ddot{y}_2) = C_{11}(m\ddot{y}_1) + C_{12}(m\ddot{y}_2)$$

$$+ C_{21}(m\ddot{y}_1)^2 + C_{22}(m\ddot{y}_1)(m\ddot{y}_2) + C_{23}(m\ddot{y}_2)^2 + C_{31}(m\ddot{y}_1)^3 + C_{32}(m\ddot{y}_1)^2(m\ddot{y}_2) + \cdots\cdots$$

BRIEF DESCRIPTION OF DRAWINGS

Figure 1 shows partially a perspective and projection drawing of measuring equipment using by an apparatus for measuring a dynamic load adopting the present invention;
Figure 2 shows a orthographic projection drawing of the equipment as shown in Figure 1;
Figure 3 shows a front elevation of the equipment as shown in Figure 1;
Figure 4 shows a graph of the excited vibration of an apparatus for measuring a dynamic load of the equipment as shown in Figure 1;
Figure 5 shows a graph of a locus of the vibration of an apparatus for measuring a dynamic load of the equipment as shown in Figure 1;
Figure 6 shows a cross-eyed illustration of a frame body of an apparatus for measuring a dynamic load adopting the present invention;

Figure 7 shows a cross section of B-B as shown in Figure 6;

Figure 8 shows an enlarged side elevation of the frame body as shown in Figure 6;

Figure 9 shows an enlarged plane elevation of an acceleration detection sensor set up in the frame body as shown in Figure 6;

Figure 10 shows a C-C cross section of Figure;

Figure 11 shows a principle of a position detection sensor using by pin photo diodes;

Figure 12 shows an experimental preferred embodiment of a position detection sensor using by pin photo diodes;

Figure 13 shows a graph of a measurement result of the experimental preferred embodiment;

Figure 14 shows a circuit composition layout of an apparatus for measuring a dynamic load adopting the present invention;

Figure 15 shows a graph of a measurement result including a disturbance using by a method and an apparatus for measuring a dynamic load adopting the present invention;

Figure 16 shows a graph of measuring result except a disturbance from the measurement result in Figure 15;

Figure 17 shows general layout illustrations that a sensing unit of a apparatus for measuring a dynamic load is set up on a time varying oscillating and vibrating base, (A) shows an apparatus composition, (B) shows a graph of change of a load acted on a sensor assembly;

Figure 18 shows illustrations to explain a principle of a method for measuring a dynamic load, (A) shows a relation between a load and a displacement in a spring mass system, (B) shows a relation between a rest load and an instant load and a relation between a displacement and their loads in a spring mass system;

Figure 19 shows an illustration to explain a method for measuring a dynamic load adopting the present invention and a load measuring principle of an apparatus for measuring a dynamic load adopting the present invention, to explain a vibrating condition of a sensor assembly base and a measuring object, a sensor assembly base and a measuring object being moving in three dimensional motion respectively;

Figure 20 shows illustrations of an acceleration spectrum and a power spectrum of a wave of the vibrating condition in Figure 19; Figure 21 shows an illustration to explain a method for measuring a dynamic load adopting the present invention and a load measuring principle of an apparatus for measuring a dynamic load adopting the present invention, an illustration of a one-degree spring mass system;

Figure 22 shows an illustration to explain a method for measuring a dynamic load adopting the present invention and a load measuring principle of an apparatus for measuring a dynamic load adopting the present invention, an illustration of an elimination effect of a disturbance excited by an impressed forced vibration; and

Figure 23 shows an illustration to explain a method for measuring a dynamic load adopting the present invention and shows conceptually a block diagram of a load data analyzing process of an apparatus for measuring a dynamic load adopting the present invention.

## DESCRIPTION OF THE PREFERRED EMBODIMENTS

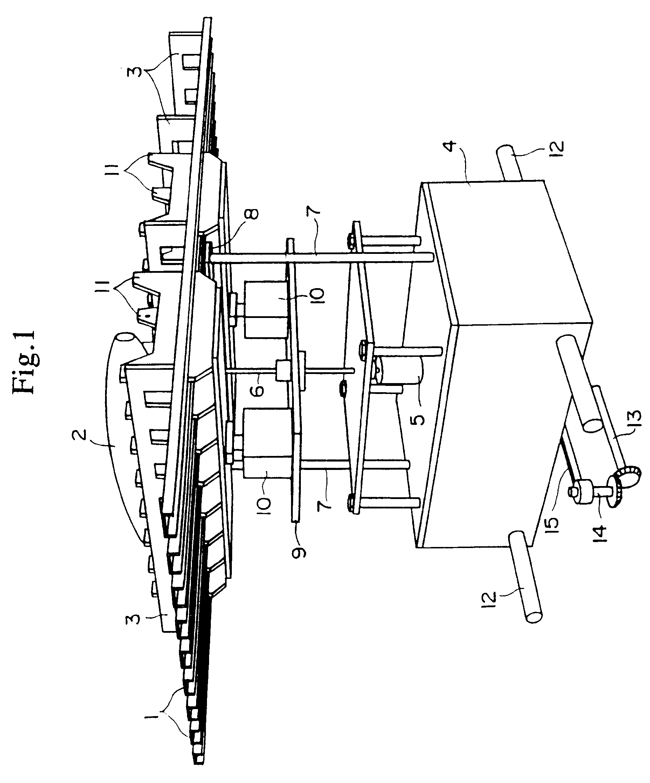

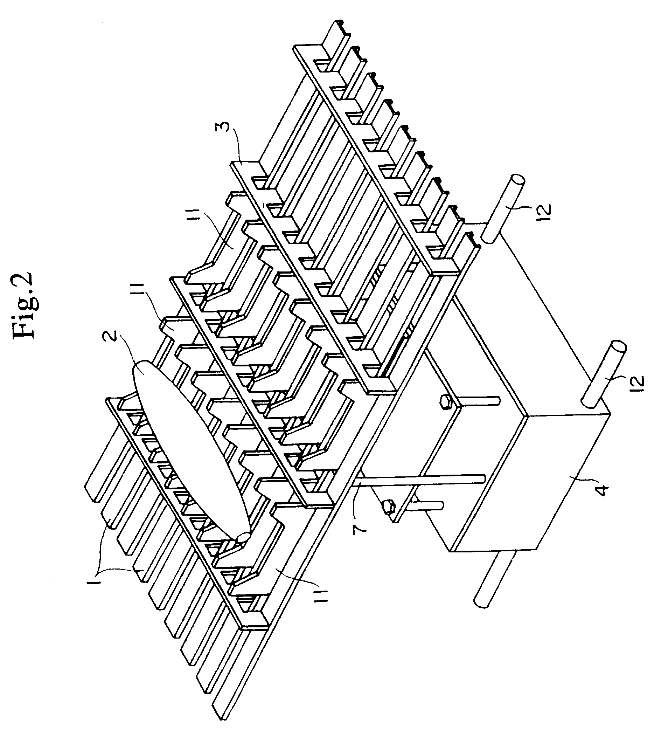

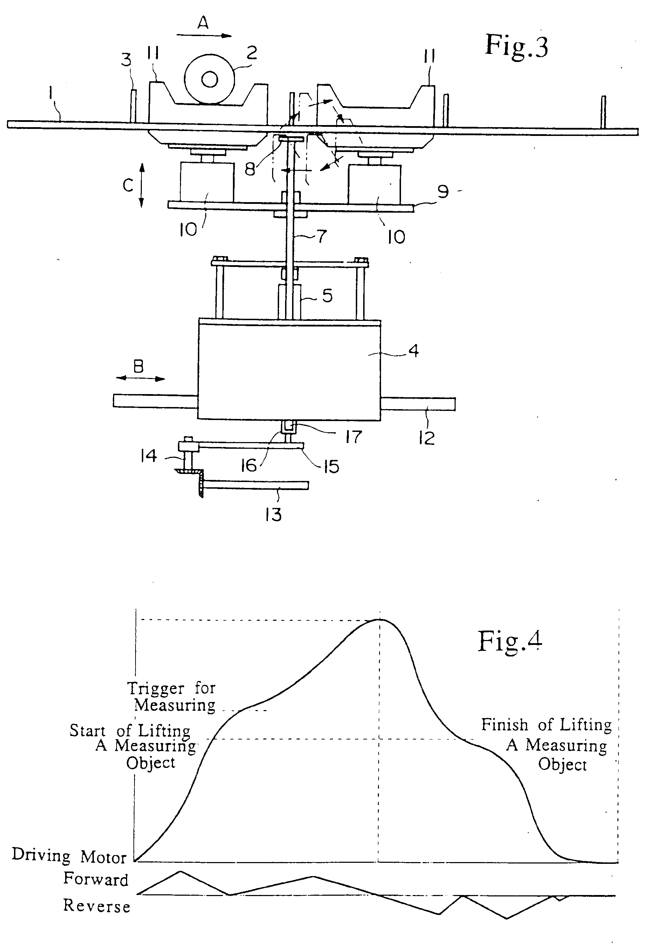

The preferred embodiments of the present invention will be explained hereinafter by referring to figures. Figures 1 and 3 shows partially drawings of measuring equipment using by an apparatus for measuring a dynamic load adopting the present invention. In Figure 1, number 1 being a guide rail, 2 being a measuring object , 3 being a carrier plate, the measuring object 2 is made to move on the guide rails 1 by the carrier plate 3. The moving direction is left to right as shown by the arrows A-A in Figure 3. The carrier plate 3 is supported by guide frames omitted in Figure 3, for example the carrier plate being to drive in the direction of the arrow A by a winding machine. The guide rails 1 are fixed and are set up in parallel at a distance as shown in Figures 1 and 2 which are partially drawn.

In Figures 1 and 3, 4 is a slide base, 5 being a driving motor, 6 being a screw shaft, 7 and 7 being stopper poles, 8 being a stopper plate, 9 being a base plate, 10 and 10 being sensing units of Dynamic Load Sensor (in short, DLS), 11 being loading plates. The low end part of the loading plates 11 is attached on one plate 11a, the plate 11a being set up on the DLS, working a load at the DLS.

The slide base 4 is supported by a pair of guide bars 12 and 12, moving with a reciprocating motion in the direction of the arrow B in Figure 3, having a driving means in its bottom part. This driving means provides a revolving transfer shaft 13 from a driving power machine omitted in figure, an intertransfer shaft 14, a transfer lever 15, a revolvable guide 16 being attached to the leading end part of the transfer lever 15, and a guide rail 17 being set up to the bottom of the slide base 4, and being interlocked to the guide 16. This driving means is that an revolution from the power machine is transferred to the transfer lever 15 through the revolving transfer shaft 13 and the intertransfer shaft, makes the transfer lever 15 revolve horizontally, makes it a reciprocating motion along the guide rail 17 with the guide 16 being revolving, (namely, the locus of the guide 16 is circular), and makes the slide base 4 a reciprocating motion in the direction of the arrow B. The reciprocating period of the slide base 4 is synchronized to the interval and the moving velocity of the carrier plate 3 moving on the guide rails 1.

The driving motor is revolving with synchronized operation of the reciprocating motion of the slide base 4, and drives the base plate 9 together with the DLS 10 in the vertical direction (the direction of the arrow C in Figure). As the results, when the loading plates 11 make an appearance from the gaps of the guide rails 1, the guide plates scoop up a measuring object 2 at the above position with their upmotion. The guide plates let go the measuring object 2 on the guide rails 1 with their downmotion below the guide rails 1. The measuring object 2 is carried out in down stream of the guide rails 1 by the carrier plate 3. Figures 1 and 2 show the top position of the loading plates 11 from the guide rails 1. The movement locus of the loading plates 11 shows chain lines and arrows in Figure 3. There is the stopper plate 8 not to attack the plate 11a to the lower part of the guide rails 1 at the topposition of the DLS 10. The carrier plate 3 is cut off at interval of the guide rails 1 in order to avoid an interfere between the loading plates 11 and the carrier plate 3.

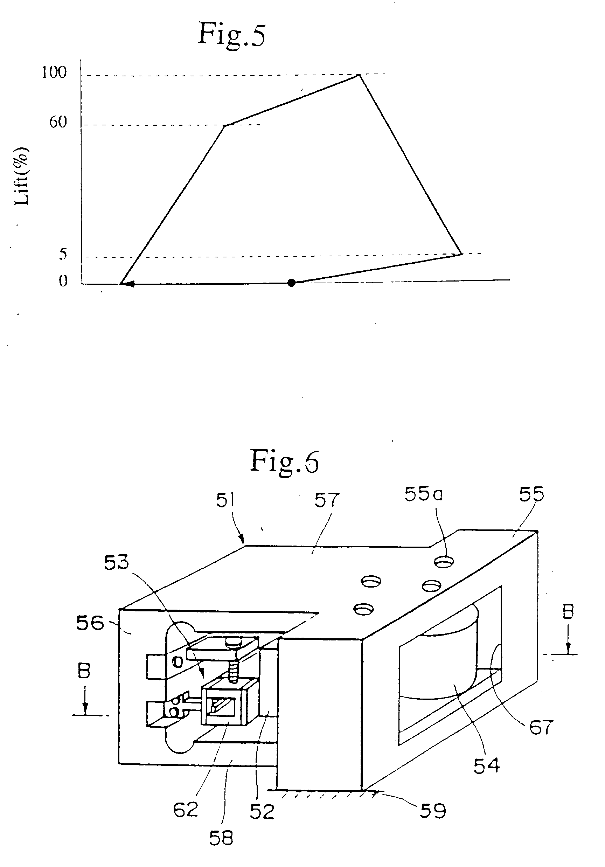

Figure 4 shows a graph of one period of the excited vibration with the reciprocating motion of the slide base 4 and with the vertical motion of the base plate 9. Figure 5 shows an example graph of a locus of the excited vibration. In this vibrating motion the loading plates 11 go up slowly in first half of the period and go down quickly in second half of the period. For instance, it is possible to revolve the revolving transfer shaft 13 with an irregular revolution rate using by an eccentric cam. This motion aims to short the measuring period. It is not essential and not necessary to adopt this measuring method and this measuring equipments in the present invention. The present invention is not restricted with a measuring method and a measuring equipment as above mentioned.

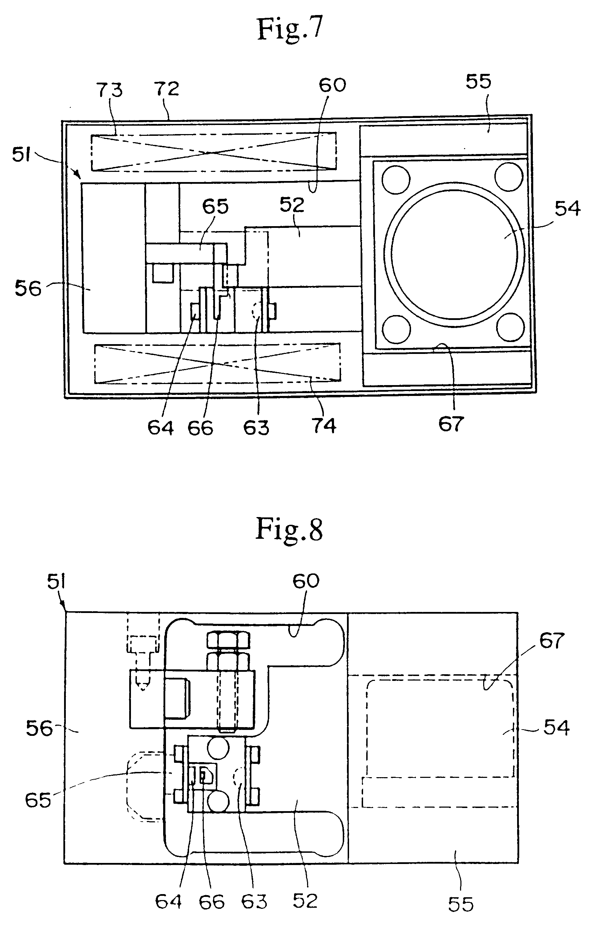

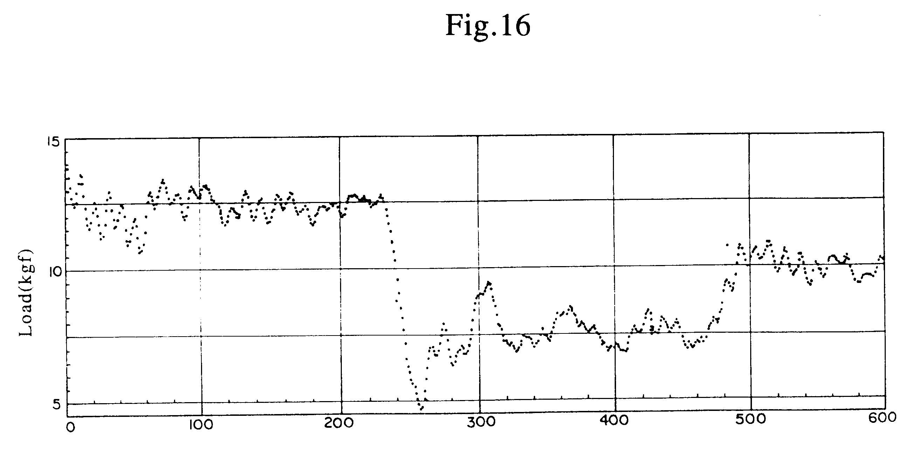

The DLS 10 is the same one that the present inventors have already proposed in PCT/JP91/01168 and PCT/JP92/01094. The DLS measures a load when the loading plates 11 is moving above the guide rails 1. The structure and measuring operation of the DLS 10 will be explained in detail hereinafter referred to Figures 6 and 16.

The DLS 10 of the present invention provides a frame body 51, an arm body 52, a load detection sensor 53 and an acceleration detection sensor 54. The frame body 51 has a rectangular hollow frame shape and provides a fixed column 55 with a large cross section, a movable column 56 that is opposed to a fixed column 55 and a upper and a lower frame girders 57 and 58 that are connected with the both columns 55 and 56. The fixed column 55 is set upon a base 9, the movable column 56 that is acted on by a measuring load is a free edge such as a cantilever beam. It is also possible that the fixed column 55 is set below a base 9, and the top upper plane side of the fixed column 55 has volt-holes 55a as shown in Figure.

The arm body 52 is arranged in a hollow interior 60 of the frame body 51 and toward the movable column 56 in that a housing 63 of a load detection sensor 53 is set up. The load detection sensor 53 provides a light emitting element 63 and a one dimensional position detection sensor such as a semiconductor pin-photo diode ( in short, PPD ) 64 set up the housing 62. A bar-mask 66 is inserted into a position between the light emitting element 63 and the PPD unit 64 from the edge of the stay 65 fixed to the movable column 56. If the PPD 64 receives an incident ray from the light emitting element 63, the PPD unit 64 generates the light current in proportion with the light receiving area and the intensity of the light ray. If a position of the bar-mask 66 is changed by a deflection of frame-beams 57 and 58 acted on by a load on the movable column 56, the change of position is output continuously by PPD 64.

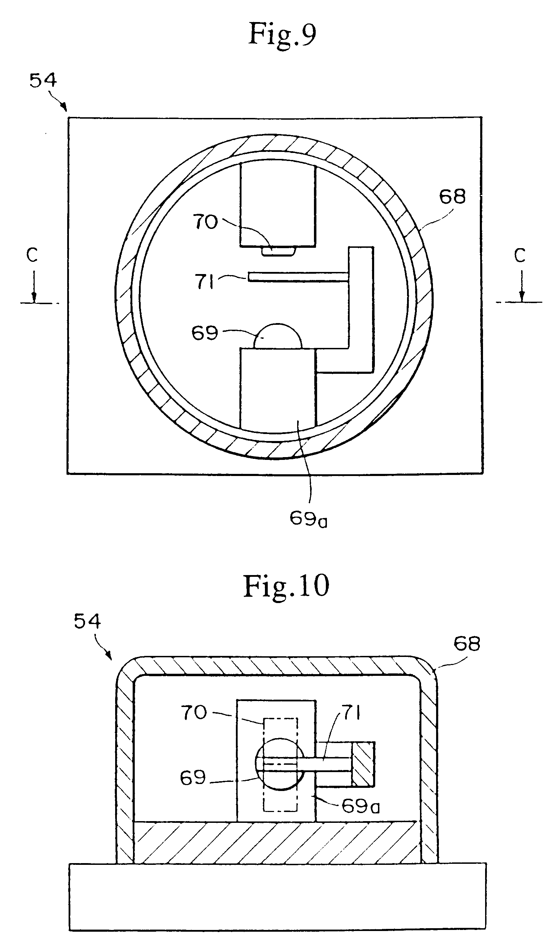

The acceleration detection sensor 54 provides a light emitting element 69 and a one dimensional position detection sensor such as a semiconductor pin-photo diode 70 set up in the inner hollow portion 67. In the cover 68, the light emitting element 69 is opposed to the one dimensional PPD unit 70. A thin movable bar-mask 71 attached to the supporter block 69a is inserted into a portion between the light emitting element 69 and the PPD 70. If the PPD unit 70 receives an incident ray from the light emitting element 69, the PPD unit generates the light current in proportion with the light receiving area and the intensity of the light ray. The thin movable bar 71 is to vibrate in a vertical direction in Fig. 10, with the frame body 51 and the base 59. If the light receiving area of the PPD unit 70 is changed by the vibrations of the thin bar 71, the light current against the change of light receiving area is output continuously by PPD 70.

The principle of a position detection using by the PPD will be explained hereinbelow.

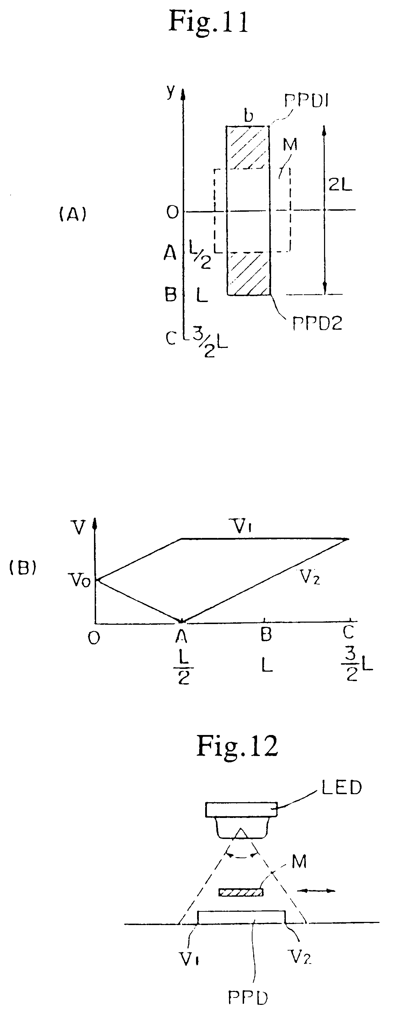

Figure 11(A) show a position relation with a mask M and PPD and Figure 11(B) shows a position relation of a mask M and output voltage of PPD. In well-known, the PPD unit is an element that the output voltage is in proportion with the light receiving area and the intensity of the light ray. It is clear that the PPD unit only is not operated as a position detection element. The inventors of the present invention can let be operated a PPD unit as a position detection element by adding a mask M to a PPD unit that is composted from a couple of elements PPD1 and PPD 2 that is arranged with a thin gap.

Assuming that the output voltages of elements PPD1 and PPD2 is V1 and V2, respectively, displacement from the center of the PPD unit O to the center of the mask M is 1, a position of the mask M is calculated from the following relations, When the center of a mask M is between O-A, such as $0 \leq 1 \leq L/2$ where 1 is a displacement,

$$1 = \frac{V1-V2}{V1+V2} \cdot \frac{L}{2}$$

When the center of a mask M is between A-C, such as $L/2 \leq 1 \leq 3L/2$,

$$1 = \frac{V2}{V1} \cdot L + \frac{L}{2}$$

If an intensity I of a light ray is constant, the output voltage V1 and V2 of elements PPD1 and PPD2 are only dependent on the position of the mask M. It is able to use PPD units as a position detection sensor because of calculating the center position of the mask M from the above related position detection element from an aforementioned relation.

A case that the intensity of the light lay changes will be considered hereinbelow. The variation dV of the output voltages of elements PPD1 and PPD2 is in proportion with the ivariation dl of the intensity of the light lay under the condition that the intensity of the light lay is changing. If the characteristics of elements PPD1 and PPD 1 is the same, the variation dV of output voltage between PPD1 and PPD2 is the same under the same conditions. If the variation of the intensity of light is only dependent on the variation $dV_{LED}$ of the light emitting power $V_{LED}$ of the light emitting element, the variation is in proportion with the variation of light power.

When the center of a mask M is between positions, O-A, the displacement 1 is calculated from the following equations,

$$1 = \frac{\left(V1 + V1\frac{dI}{dt}\right) - \left(V2 + V2\frac{dI}{dt}\right)}{\left(V1 + V1\frac{dI}{dt}\right) + \left(V2 + V2\frac{dI}{dt}\right)} \cdot \frac{L}{2}$$

$$= \frac{(V1 - V2) \cdot \left(1 + \frac{dI}{dt}\right)}{(V1 + V2) + \left(1 + \frac{dI}{dt}\right)} \cdot \frac{L}{2}$$

$$= \frac{(V1 - V2)}{(V1 + V2)} \cdot \frac{L}{2}$$

When the center of a mask M is between positions, A-C, the displacement 1 is calculated from the following equations,

$$1 = \frac{\left(V2 + V2\frac{dI}{dt}\right)}{\left(V1 + V1\frac{dI}{dt}\right)} \cdot L + \frac{L}{2}$$

$$= \frac{V2}{V1} \cdot L + \frac{L}{2}$$

From above analysis the influence of the change of light power can be removed and, as the results, PPD units can be useful as a position detection sensor. If PPD units can detect positions, an acceleration is calculated from a second-order derivative with respect to time and PPD units can be useful as an acceleration detection sensor.

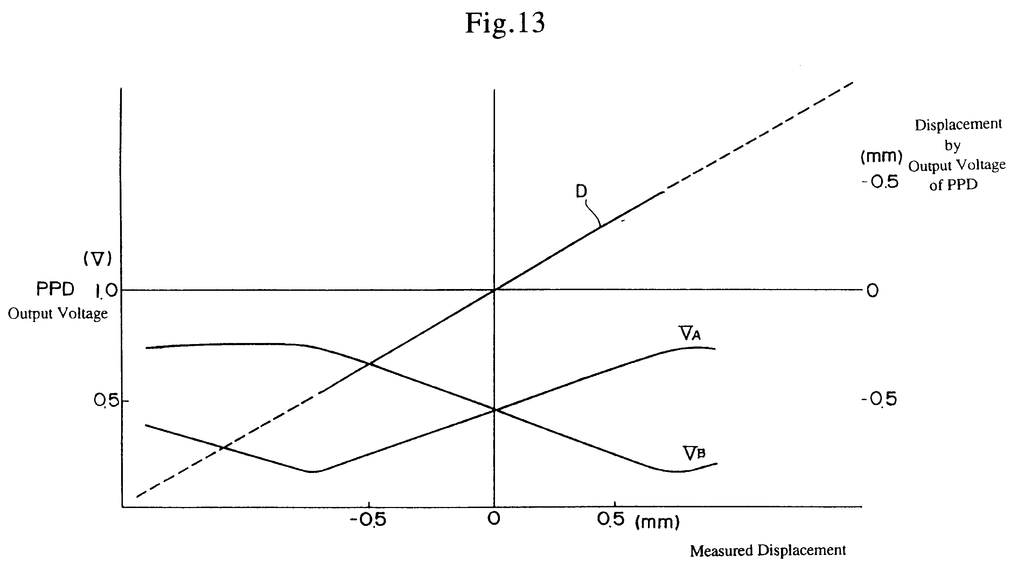

Figure 12 shows a principle draw of one dimensional position detection that is a PPD. The micro-displacement is attached to the mask M that is inserted into between LED and PPD and let be move by any device such as a micrometer. The output voltages V1 and V2 of elements PPD are measured by turns. It is shown in Figure 13 for the measurement results. The displacement D by output voltage of PPD becomes a linear curve as shown in Figure. It is found that PPD can be useful as a position detection sensor. The width of the mask M in Figure 12 is 1.5 mm and the one of PPD is 3.0 mm.

The electrical circuit composition of the DLS 10 will be described as follows. A cover 72, not shown in Fig. 6, printed circuit boards 73 and 74 are set up therein as shown in Fig. 7. The printed circuit boards 73 and 74 provide, for example, two or more blocking-layers boards and provides two circuit of the PPD 64 and a light emitting element 63 in a load detection sensor 53 and a PPD 70 and a light emitting element 69 in the light detection sensor 54, respectively; the load detection circuit 25 and the acceleration detection circuit 26.

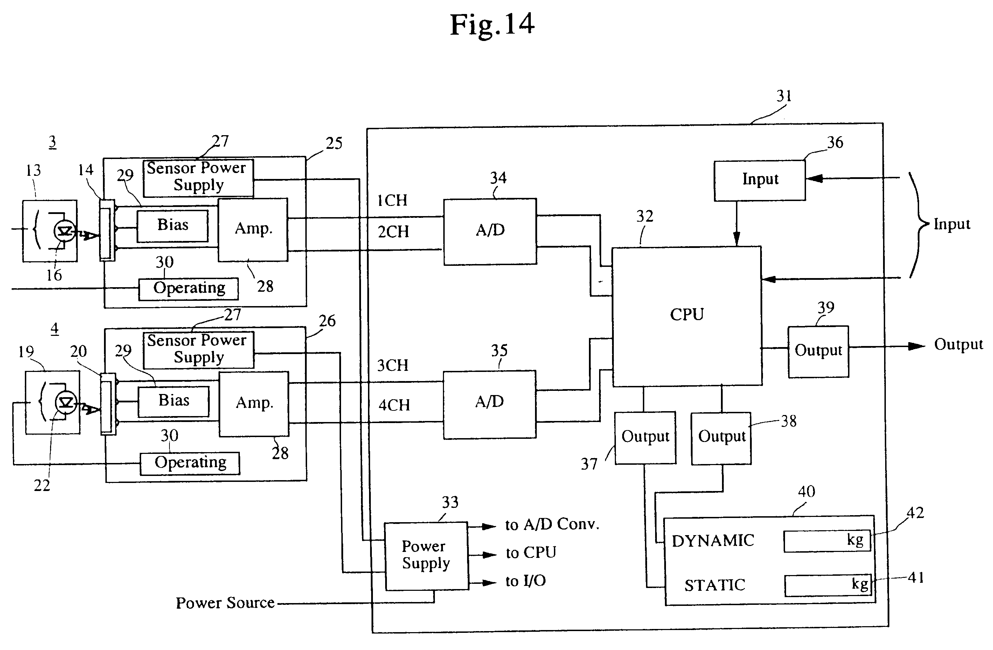

These detection circuits 25 and 26 in Fig. 14 have the same circuit composition and provide sensor power supply circuits 27, current amplification circuits 28 that amplify position detection outputs by PPD 64 and 70, bias circuits 29 for outputs of PPD 64 and 70, and operating circuits 30 for light emitting elements, respectively. The detection circuits 25 and 26 are connected with each analyzing unit 31. The analyzing unit 31 provides a CPU 32, a power supply 33, two A/D converters 34 and 35, an input circuit 36, three output circuits 37, 38 and 39 and a display circuit 40. The analyzing unit 31 can take many kinds of forms, for instance, attaching the analyzing unit to the fixed column 55 of the frame body 51 or to an arm-body 52, setting up a unit analyzer at outside of the frame body 51 or to an arm-body 52, attaching a part of a analyzing unit to the fixed column 55 of the frame body 51 and setting up a part of a unit analyzer at outside of sensing equipment.

The power supply circuit 33 is connected with an outside power supply and supplies to a sensor power supply circuit 27 of detection sensor circuits 25 and 26, a CPU unit 32, a A/D converter 34, an input circuit 36, three output circuits 37,38 and 39 and a display circuit 40. A couple of A/D converters 34 and 35 are connected with detection circuits 25 and 26 of the PPD units 64 and 70 via the current amplification circuits 28, and input a couple of analog data from a couple of A/D converters 34 and 35 of the current amplification circuit 28 to the CPU unit 32. An interface circuit of input signals is not shown in this case. The output circuit 37 is the display 41 of measurement loads of the display circuit 40, the output circuit 38 being the display 42 of a dynamic load of the display circuit 40, the output circuit 39 being the external output.

In the present preferred embodiment the load measuring is always done in the mode when the DLS 10 is moving positions. In the analyzing unit 31, the mass m of the measuring object is calculated from the following equation,

$$m[\ddot{y}] = mg - [(mg + kf_2(y - y_1 + y_2)) - f_3(\dot{y} - \dot{y}_1 + \dot{y}_2) + f_1(m\ddot{y}_1, m\ddot{y}_2)]$$

where $\dot{y}_1$ and $\ddot{y}_1$ being the velocity and the acceleration of vibration of the base 59 respectively, getting the first-order and the second-order derivatives with respect to time from the displacement $y_1$ by measuring the output of the PPD 70 which is the displacement of the fixed column 55 excited by the vibration of the base plate 9 and the DLS 10 itself. The $\dot{y}_2$ and $\ddot{y}_2$ are the velocity and the acceleration of vibration of the moval column 56 of the frame body 51 respectively, getting the first-order and the second-order derivatives with respect to time from the displacement $y_2$ by measuring the output of the PPD 64 which is the displacement of the moval column 56. As above mentioned, the term $kf_2(y - y_1 + y_2)$ is the material term of the component structure of the spring mass system, k being a spring constant, $f_3(\dot{y} - \dot{y}_1 + \dot{y}_2)$ being the damping term such as viscous friction, coulomb, hysteresis, fluid drag and fluid virtual mass drag damping, and $f_1(m\ddot{y}_1, m\ddot{y}_2)$ being the resultant time-varying forces term acting on the object of the mass m).

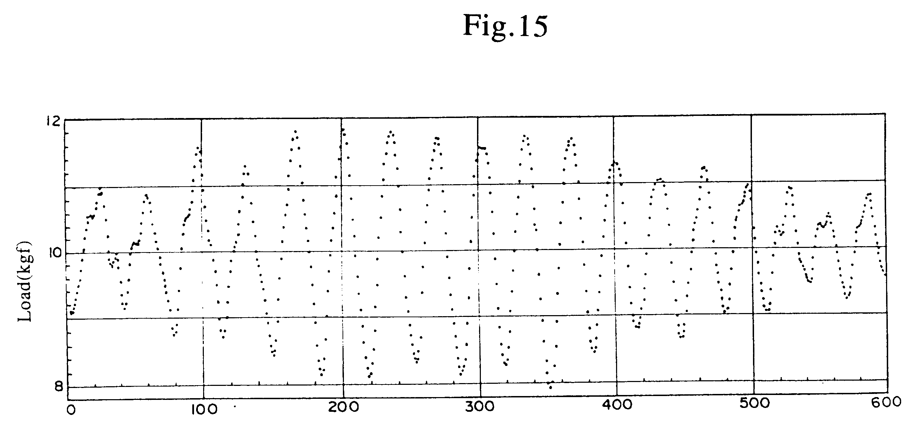

The calculated results of the preferred embodiments will be now explained. Figure 15 shows one example of a graph of a load (mg) calculated from the measurement displacements $y_1$ and $y_2$ when a measuring object 2 (mg = 10 Kg) is supplied on the guide rails 1 and the slide base 4 and the loading plates 11 are very slowly made to move under vibrating conditions excited by disturbances such as a driving motor etc. Figure 16 shows one example of a graph of a load (mg) when the slide base 4 and the loading plates 11 are very quickly made to move with a very short period.

In Figure 15 the influence of the disturbance appears the measuring data. In Figure 16 the effect of vibrating conditions of the DLS 10 only appears the measuring data. It becomes evident that in Figure 16 the influence of the disturbance such as a driving motor etc. in Figure 15 doesn't appear the measuring data. In Figure 15 the measuring results are the maximum instant load of 11.827 Kgf and the minimum instant load of 7.913 Kgf and the calculated load by the analyzing method of the present invention is 10.001 Kgf. In Figure 16 the measuring results are the maximum instant load of 13.924 Kgf and the minimum instant load of 4.677 Kgf and the calculated load by the analyzing method of the present invention becomes 10.000 Kgf.

As the results, it can be concluded that it is possible to get measuring loads with very high accuracy without being affected by shaking, oscillating and vibrating conditions excited by the apparatus itself and the external environment, giving the DLS 10 the external forces with large periods and making the DLS 10 vibrate.

As above mentioned, the method and the apparatus for measuring a dynamic load adopting the present invention proves that it is possible to do a dynamic load measurement with very high accuracy under the oscillating and vibrating conditions excited by the apparatus itself and the external environment without being affected by their oscillating and vibrating conditions, making the equipment elements of measuring a dynamic load move, vibrate and do with the resultant motion positively.

**Claims**

1. Method for measuring a dynamic load (2) comprising that one end part of a component structure composed by a spring mass system (10) being fixed to a base (9) composed by a non-spring mass system, the other end part being free, working the load (2) at the free end part of said, component structure composed by the spring mass system, making said base (9) periodically and continuously move or vibrate together with said component structure composed by the spring mass system, measuring continuously a displacement $y_1$ of said base with respect to a stationary frame of reference, measuring continuously a displacement $y_2$ of said free end part of said component structure with respect to said base, getting the first-order derivatives $\dot{y}_1$ and $\dot{y}_2$ and the second-order derivatives $\ddot{y}_1$ and $\ddot{y}_2$ with respect to time from said displacements $y_1$ and $y_2$, determining the mass m of said dynamic load (2) by means of a fitting procedure, with the mass m being a fitting parameter for the time series data of $y_1$ $y_2$, $\dot{y}_1$, $\dot{y}_2$, $\ddot{y}_1$, $\ddot{y}_2$ with respect to the equation of motion of said dynamic load.

2. Method for measuring a dynamic load according to claim 1, wherein a vibrating means is to vibrate said base in the direction of working a load to the free end part of said component structure composed by a spring mass system.

3. Apparatus for measuring a dynamic load (2) comprising a base (9) composed by a non-spring mass system (10), a frame body which is composed by a spring mass system and whose one end part is fixed to said base and whose other end part is free, a first displacement sensor measuring a displacement $y_1$ of said base excited by vibrations and oscillations with respect to a stationary frame of reference, a second displacement sensor measuring a displacement $y_2$ of said free end part with respect to said base at said free end part, a vibrating means which in use makes said base (9) periodically and continuously vibrate together with said frame body and said displacement sensors, an analyzing unit adapted to determine the first-order derivatives $\dot{y}_1$ and $\dot{y}_2$, and the second-order derivatives $\ddot{y}_1$ and $\ddot{y}_2$ with respect to time from said displacements $y_1$ and $y_2$, with said analyzing unit furthermore adapted to determine the mass m of said dynamic load by means of a fitting procedure, with the mass m being a fitting parameter for the time series data of $y_1$, $y_2$, $\dot{y}_1$, $\dot{y}_2$, $\ddot{y}_1$, $\ddot{y}_2$ with respect to the equation of motion of said dynamic load.

4. Apparatus for measuring a dynamic load according to claim 3, wherein each of the first and the second displacement sensors comprises a light-emitting element, a one dimensional position detection element which provides a pair of semiconductor pin-photo diode elements (in short, PPD) arranged with a thin gap, and a spring-bar element inserted into a portion between a light emitting element and a one dimensional position detection element in each of the first and the second displacement sensors, one of said light-emitting element or said one dimensional position detection element being set up a free end part of said frame body, the other being set up a fixed end part of said frame body, fixing the one edge of said spring-bar elements to a free end part or fixed end part of said frame body, masking a portion of said one dimensional position detection element by said spring-bar, said one dimensional position detection element generating the intensity of the light ray from said light-emitting element in proportion with the vibration of said spring-bar.

5. Apparatus for measuring a dynamic load according to claim 3 or 4, wherein said vibrating means is to vibrate said base in the direction of working a load to the free end part of said component structure composed by a spring mass system.

**Patentansprüche**

1. Verfahren zur Messung einer dynamischen Last (2), welches das Anbringen eines Endteils eines aus einem Feder-Masse-System (10) bestehenden Bauelementaufbaus an einer aus einem Nicht-Feder-Masse-System bestehenden Grundplatte (9), wobei das andere Endteil frei ist, das Hantieren der Last (2) an dem freien Endteil des aus dem Feder-Masse-System bestehenden Bauelementaufbaus, das Bewirken einer regelmäßigen und kontinuierlichen Bewegung oder Vibration der Grundplatte (9) zusammen mit dem aus dem Feder-Masse-System bestehenden Bauelementaufbau, das kontinuierliche Messen einer Verschiebung $y_1$ der Grundplatte bezüglich eines feststehenden Bezugsrahmens, das kontinuierliche Messen einer Verschiebung $y_2$ des freien Endteils des Bauelementaufbaus bezüglich der Grundplatte, das Erhalten der Ableitungen erster Ordnung $\dot{y}_1$ und $\dot{y}_2$ und der Ableitungen $\ddot{y}_1$ und $\ddot{y}_2$ zweiter Ordnung bezüglich der Zeit aus den Verschiebungen $y_1$ und $y_2$, das Ermitteln der Masse m der dynamischen Last (2) mittels eines Ausgleichsvorgangs, wobei die Masse m ein Ausgleichsparameter für die Zeitreihendaten von $y_1$, $y_2$, $\dot{y}_1$, $\dot{y}_2$, $\ddot{y}_1$, $\ddot{y}_2$ bezüglich der Bewegungsgleichung der dynamischen Last ist, umfasst.

2. Verfahren zur Messung einer dynamischen Last nach Anspruch 1, dadurch gekennzeichnet, dass ein Vibrationsmittel die Grundplatte in die Richtung des Hantierens einer Last zu dem freien Endteil des aus einem Feder-Masse-System bestehenden Bauelementaufbaus vibrieren lassen soll.

3. Vorrichtung zur Messung einer dynamischen Last (2), welche Folgendes umfasst: eine aus einem Nicht-Feder-Masse-System (10) bestehende Grundplatte (9), einen Rahmenkörper, der aus einem Feder-Masse-System besteht und dessen eines Endteil an der Grundplatte befestigt ist und dessen anderes Endteil frei ist, einen ersten Verschiebungssensor, der eine durch Vibrationen und Schwingungen bezüglich eines feststehenden Bezugsrahmens ausgelöste Verschiebung $y_1$ der Grundplatte misst, einen zweiten Verschiebungssensor, der eine Verschiebung $y_2$ des freien Endteils bezüglich der Grundplatte an dem freien Endteil misst, ein Vibrationsmittel, das die Grundplatte (9) regelmäßig und kontinuierlich zur Vibration zusammen mit dem Rahmenkörper und den Verschiebungssensoren bringt, eine zur Ermittlung der Ableitungen $\dot{y}_1$ und $\dot{y}_2$ erster Ordnung und der Ableitungen $\ddot{y}_1$ und $\ddot{y}_2$ zweiter Ordnung bezüglich der Zeit aus den Verschiebungen $y1$ und $y2$ ausgelegte Analysevorrichtung, wobei die Analysevorrichtung weiterhin zur Ermittlung der Masse m der dynamischen Last mittels eines Ausgleichsvorgangs ausgelegt ist, wobei die Masse m ein Ausgleichsparameter für die Zeitreihendaten von $y_1$, $y_2$, $\dot{y}_1$, $\dot{y}_2$, $\ddot{y}_1$, $\ddot{y}_2$ bezüglich der Bewegungsgleichung der dynamischen Last ist.

**4.** Vorrichtung zur Messung einer dynamischen Last nach Anspruch 3, dadurch gekennzeichnet, dass jeder der ersten und zweiten Verschiebungssensoren ein Licht emittierendes Element, ein eindimensionales Positionsbestimmungselement, das ein Paar mit einem schmalen Spalt angeordnete Halbleiter-Pin-Photo-Diodenelemente (kurz PPD) vorsieht, und ein in einen Abschnitt zwischen einem Licht emittierenden Element und einem eindimensionalen Positionsbestimmungselement eingesetztes Federstangenelement in jedem der ersten und zweiten Verschiebungssensoren umfasst, wobei entweder das Licht emittierende Element oder das eindimensionale Positionsbestimmungselement an einem freien Endteil des Rahmenkörpers angebracht ist, während das andere an einem festen Endteil des Rahmenkörpers angebracht ist, unter Befestigung einer Kante der Federstangenelementen an einem freien Endteil oder festen Endteil des Rahmenkörpers, Verdeckung eines Teils des eindimensionalen Positionsbestimmungselements durch die Federstange, wobei das eindimensionale Positionsbestimmungselement die Intensität des Lichtstrahls von dem Licht emittierenden Element im Verhältnis zur Vibration der Federstange erzeugt.

**5.** Vorrichtung zur Messung einer dynamischen Last nach Anspruch 3 oder 4, dadurch gekennzeichnet, dass das Vibrationsmittel die Grundplatte in Richtung des Hantierens einer Last zu dem freien Endteil des aus einem Feder-Masse-System bestehenden Bauelementaufbaus zum Vibrieren bringen soll.

**Revendications**

**1.** Procédé de mesurage d'une charge dynamique (2) comprenant une première partie d'extrémité d'une structure constitutive composée par un système massique élastique (10) en étant fixée à une base (9) composée par un système massique non élastique, l'autre partie d'extrémité étant libre, en faisant travailler la charge (2) à la partie d'extrémité libre de ladite structure constitutive composée par le système massique élastique, en faisant que ladite base (9) se déplace ou vibre de manière périodique et continue en même temps que ladite structure constitutive composée par le système massique élastique, en mesurant de manière continue un déplacement $y_1$ de ladite base par rapport à un bâti de référence fixe, en mesurant de manière continue un déplacement $y_2$ de ladite partie d'extrémité libre de ladite structure constitutive par rapport à ladite base, en obtenant les dérivés $\dot{y}_1$ et $\dot{y}_2$ du premier ordre et les dérivés $\ddot{y}_1$ et $\ddot{y}_2$ du second ordre par rapport au temps à partir des déplacement $y_1$ et $y_2$, en déterminant la masse m de ladite charge dynamique (2) au moyen d'un processus de montage, avec la masse m qui est un paramètre de montage pour les données de séries temporelles de $y_1$, $y_2$, $\dot{y}_1$ $\dot{y}_2$ $\ddot{y}_1$ $\ddot{y}_2$ par rapport à l'équation de mouvement de ladite charge dynamique.

**2.** Procédé de mesurage d'une charge dynamique selon la revendication 1, dans lequel un moyen vibrant est prévu pour faire vibrer ladite base dans la direction de travail d'une charge vers la partie d'extrémité libre de ladite structure constitutive composée par un système massique élastique.

**3.** Dispositif de mesurage d'une charge dynamique (2) comprenant une base (9) composée par un système massique non élastique (10) ; un corps de bâti qui est composé par un système massique élastique et dont une première partie d'extrémité est fixée à ladite base et dont l'autre partie d'extrémité est libre, un premier capteur de déplacement mesurant un déplacement $y_1$ de ladite base excitée par des vibrations et des oscillations par rapport à un bâti de référence fixe, un second capteur de déplacement mesurant un déplacement $y_2$ de ladite partie d'extrémité libre par rapport à ladite base au niveau de ladite partie d'extrémité libre, un moyen vibrant qui, en service, fait que ladite base (9) vibre de manière périodique et continue en même temps que ledit corps de bâti et lesdits capteurs de déplacement, une unité d'analyse adaptée à déterminer les dérivés du premier ordre $y_1$ et $y_2$ et les dérivés du second ordre $y_1$ et $y_2$ par rapport au temps à partir desdits déplacements $y_1$ et $y_2$, ladite unité d'analyse étant en outre adaptée pour déterminer la masse m de ladite charge dynamique au moyen d'un processus de montage, avec la masse m qui est un paramètre de montage pour les données de séries temporelles de $y_1$, $y_2$ $\dot{y}_1$ $\dot{y}_2$, $\ddot{y}_1$, $\ddot{y}_2$ par rapport à l'équation de mouvement de ladite charge dynamique.

**4.** Appareil de mesurage d'une charge dynamique selon la revendication 3, dans lequel chacun des premier et second capteurs de déplacement comprend un élément électroluminescent, un élément de détection de position unidimensionnel qui crée une paire d'éléments à photodiodes semi-conductrices à broche (en abrégé, PDB) disposés avec un mince intervalle, et un élément à barre élastique inséré dans une partie entre un élément électroluminescent et un élément de détection de position unidimensionnel dans chacun des premier et second capteurs de déplacement, l'un parmi ledit élément électroluminescent et ledit élément de détection de position unidimensionnel étant établi à une partie d'extrémité libre dudit corps de bâti, l'autre étant établi à une partie d'extrémité fixe dudit corps de bâti, en fixant le premier bord desdits éléments à barre élastique à une partie d'extrémité libre ou à une partie d'extrémité fixe dudit corps de bâti, en masquant une partie dudit élément de détection de position unidimensionnel par ladite barre élastique, ledit élément de détection de position unidimensionnel produisant l'intensité du rayon lumineux provenant dudit élément électroluminescent proportionnellement à la vibration de ladite barre élastique.

5. Appareil pour le mesurage d'une charge dynamique selon la revendication 3 ou 4, dans lequel ledit moyen vibrant est prévu pour faire vibrer ladite base dans la direction de travail d'une charge vers la partie d'extrémité libre de ladite structure constitutive composée par un système massique élastique.

Fig.1

Fig.2

Fig.3

Fig.4

Trigger for Measuring

Start of Lifting A Measuring Object

Finish of Lifting A Measuring Object

Driving Motor

Forward

Reverse

## Fig.5

## Fig.6

# Fig.7

# Fig.8

# Fig.9

54

68

70

71

69

C          C

69a

# Fig.10

54

68

70          71

69

69a

# Fig.11

(A)

(B)

# Fig.12

# Fig.13

## Fig.14

# Fig.15

## Fig.16

EP 0 662 604 B1

# Fig.17

# Fig.18

(A)

(B)

# Fig.19

# Fig.20

(A)

Acceleration

$\ddot{\xi}_k$

$\lambda_k \ddot{\xi}_k$

f : Frequency

Acceleration Spectrum

(B)

Energy Magnitude

$\ddot{\xi}_k$

$\lambda \ddot{\xi}_k$

$\omega(=2\pi f)$ : Angular Frequency

Acceleration Power Spectrum

(C)

Acceleration

$\ddot{Y}$

$\sum_{k=1}^{N} \lambda_k \ddot{\xi}_k$

f : Frequency

Acceleration Spectrum

(D)

Energy Magnitude

$\ddot{Y}$

$\sum_{k=1}^{N} \lambda_k \ddot{\xi}_k$

$\omega(=2\pi f)$ : Angular Frequency

Acceleration Power Spectrum

Fig.21

$P_0 \sin \omega pt$

$\sum_{k=1}^{N} Q_i \sin(\omega_Q)_i t$

Fig.22

$P(t)+Q_i(t)$

$P(t)$

$Q_i(t)$

Fig.23

| Sampling & A/D Convert. | Digitizing & Convolution | Comparing & Numerical Calculation | Iteration & Conversing |
|---|---|---|---|

Output